# EUROPEAN PATENT APPLICATION

(11) **EP 1 786 205 A1**
(43) Date of publication of application: **16.05.2007**
(21) Application number: 05775108.3
(22) Date of filing: 29.08.2005
(51) Int. Cl.: H04N 5/91, G11B 20/10, G11B 20/12, G11B 27/00

(54) **RECORDER**

(30) Priority: 30.08.2004 JP 2004251017
(71) Applicant: MATSUSHITA ELECTRIC INDUSTRIAL CO., LTD., Osaka 571-8501 (JP)
(72) Inventor: IWATA, Yoshiaki Matsushita Ind.Co,Ltd, Osaka-shi Osaka 540-6319 (JP); NONAKA, Masao Matsushita Ind.Co,Ltd, Osaka-shi Osaka 540-6319 (JP); OHMORI, Motoji Matsushita Ind.Co,Ltd, Osaka-shi Osaka 540-6319 (JP); YAMAUCHI, Kazuhiko Matsushita Ind.Co,Ltd, Osaka-shi Osaka 540-6319 (JP)
(74) Representative: Grünecker, Kinkeldey, Stockmair & Schwanhäusser Anwaltssozietät
(86) International application number: PCT/JP2005/015657
(87) International publication number: WO 2006/025322

(57) **Abstract**

A recording apparatus for copying a digital stream recorded on a first recording medium using a code format compatible with the first recording medium to a second recording medium after the digital stream has been converted to a code format compatible with the second recording medium, comprising: a detection unit operable to detect a plurality of devices that are available for distributed processing from devices connected to the recording apparatus via a network; an allocation unit operable to divide the digital stream at one or more predetermined points on a playback time axis and to allocate the divided portions to the detected devices respectively; a transmission unit operable to transmit the allocated portions to the respective detected devices; a control unit operable to control the detected devices to perform transcoding for converting a code format of the allocated portions to the code format compatible with the second recording device; and a writing unit operable to receive converted portions resulting from the transcoding from the detected devices and to write the received portions to the second recording medium.

## Description

### Technical Field

The present invention relates to a recording apparatus that records a digital stream on a recording medium.

### Background Art

Many recording apparatuses of recent years are equipped with a plurality of recording media, namely a HDD, a DVD and a SD memory card and so on. In such a recording apparatus, transcoding is necessary for copying a digital stream from one recording medium to another. The transcoding is processing for converting a code format of a digital stream to another code format. For example, the transcoding is used for converting a digital stream in the MPEG2 format recorded on a HDD to a digital stream in the MPEG4 format to be used with an SD memory card, or for converting a digital stream in the MPEG2-TS format recorded on a HDD to a digital stream in the MPEG2-PS format to be used with a DVD. Such transcoding realizes copying of digital streams from a medium to another, e.g. from a HDD to an SD memory card, and from a HDD to a DVD. The transcoding requires a time equal to the playback time of the digital stream. This is because the transcoding needs to decompress the digital stream that has been compressed. To accelerate the transcoding, it is possible to have a plurality of processors in a single device perform parallel processing. In this method, a program file is divided into portions by a division circuit, and the portions of the program file are transcoded by a plurality of transcode devices respectively. Then, the portions are integrated by an integration circuit. As a result, a transcoded program file is generated as a whole.

### Disclosure of the Invention

### Problems to be Solved the Present Invention

However, the above-described method requires a plurality of processors to be set up in a signal device. Accordingly, this method imposes a higher cost on manufactures of such a recording apparatus. This means that an extra burden is put on the manufacturers who have been already struggling in the price competition of recording apparatuses. Therefore, it is almost impossible to promote such a method.
The present invention is made in view of the above-described problem. The obj ect of the present invention is to provide a recording apparatus that can reduce the transcode time without providing a plurality of processors in the recording apparatus.

### Means for Solving the Problem

To solve the above-described problem, the present invention provides a recording apparatus for copying a digital stream recorded on a first recording medium using a code format compatible with the first recording medium to a second recording medium after the digital stream has been converted to a code format compatible with the second recording medium, comprising: a detection unit operable to detect a plurality of devices that are available for distributed processing from devices connected to the recording apparatus via a network; an allocation unit operable to divide the digital stream at one or more predetermined points on a playback time axis and to allocate the divided portions to the detected devices respectively; a transmission unit operable to transmit the allocated portions to the respective detected devices; a control unit operable to control the detected devices to perform transcoding for converting a code format of the allocated portions to the code format compatible with the second recording device; and a writing unit operable to receive converted portions resulting from the transcoding from the detected devices and to write the received portions to the second recording medium.

### Advantageous Effect of the Invention

With the stated structure, the recording apparatus of the present invention detects devices available for distributed processing from among devices connected to a network, and has the detected devices perform transcoding. As a result, even if each of the devices connected to the network has an original purpose and becomes available only occasionally, it is possible to use the devices as if they are a plurality of processors built in the recording apparatus. As a result, it is possible to shorten the time required for performing the transcoding without providing a plurality of processors in the recording apparatus. For example, in the case where two devices are detected by the detection and the time length of the digital stream to be transcoded is two hours, if the first half of the transcoding is assigned to one of the detected devices and the second half if assigned to the other one of the detected devices, it is possible to complete the transcoding in one hour. This means that the time required for the transcoding, which is originally two hours, can be shortened for 1 hour. The copying will be completed after this one hour has elapsed. Since the present invention can accelerate the transcoding cheaply, it is possible to promote the high-speed transcoding.

Also even if the recording apparatus can not perform the transcoding because the recording apparatus is performing recording, the transcoding can be performed as distributed processing by the devices connected to the network.
However, if the devices are connected via a home network, it is difficult to apply the distributed processing technique due to circumstances specific to the home network. The circumstances specific to the home network is, specifically, the following. A home network is structured with a plurality of devices having different capabilities, suchasadigitalTV, a personal computer, a game machine, and so on. Due to the difference of the capabilities, it is impossible to efficiently perform the processing by simply assigning the processing to the devices equally. To solve this problem, it is preferable that the detection unit acquires, from the respective detected devices, capability values thereof, and time lengths of the divided portions to be respectively allocated to the detected devices are based on a ratio of each capability value to a total of the capability values.

With this structure, it is possible to allocate a large portion of the digital stream to a device having a high capability, and efficiently perform the transcoding.
In the home network, the digital TV, the personal computer and the game machine have their original purposes, and are not necessarily always available. Due to this circumstance, it is impossible to efficiently perform the processing by simply assigning the processing to the devices. To solve this problem, it is preferable that the transcoding is real-time processing that requires a time that is the same as a playback time of the digital stream; the detection unit periodically detects the devices; if the detection unit detects the devices a plurality of times within the playback time of the digital stream, the allocation unit allocates the divided portions to the detected devices every time the detection is performed, the transmission unit transmits the allocated portions to the respective detected devices, and the control unit instructs the detected devices to perform the transcoding of the portions respectively allocated thereto.

With this structure, the detection of the available devices is periodically performed. Therefore, even if the devices are not always available, it is possible to use the devices for the distributed processing only when they are available. As a result, it is possible to accelerate the transcoding with flexible use of the devices.
Here, the transmission unit may assign unique encryption keys to the respective detected devices, and transmit the allocated portions to the respective detected devices after encrypting the allocated portions using the encryption keys.

With this structure, it is possible to encrypt the digital stream. As a result, the present invention can support copyrighted digital streams.
Here, the recording apparatus may further comprise a transcode unit operable to perform the transcoding, wherein the detection unit may detect the recording apparatus as a device that is available for the distributed processing if the recording apparatus is capable of performing the transcoding.

Here, the transcode unit may be used for writing the digital stream to the second recording medium, and the detection unit may not detect the recording apparatus as the device that is available for the distributed processing while the digital stream is being recoded.
With this structure, if the recording apparatus can perform the transcoding, the recording apparatus detects the recording apparatus itself as a device available for the distributed processing. Therefore, it is possible to use the recording apparatus itself for the distributed processing.

Here, the recording apparatus may further comprise a display unit operable to display, when a recording instruction is input from a user, a message saying that transcode efficiency is decreased while recording is executed.
With the stated structure, if receiving an instruction for recording from the user, the recording apparatus displays a message saying that the efficiency of the transcoding will decrease. As a result, even if the user inputs an instruction for a scheduled-recoding during the execution of the transcoding, the present invention can give an opportunity to the user to decide whether or not to schedule the recoding.

Here, the recording apparatus may further comprise a display unit operable to display a list of the detected devices; and a reception unit operable to receive a selection by a user of a device to be used for the distributed processing, wherein the control unit may have all the detected devices perform the transcoding if the user select all the detected devices, and may not have a device not selected by the user perform the transcoding.

With the stated structure, the user can select devices to be used for the distributed processing. As a result, if a device that the user is going to use is shown in the list of the available devices, the user can exclude the device from the devices to be used for the distributed processing by not selecting the device.
Here, the display unit nay calculate and display a predicted time required for transcoding a whole of the digital streamon reception of the selection by the user.

With the stated structure, the recording apparatus displays the predicted time required of each of the selected devices to transcoding the whole digital stream. Therefore, the user can select a device that can complete the transcoding in the shortest time.
Here, the control unit may assign an identifier to each of the divided portions before the portions are transmitted to the respective detected devices, and if results of the transcoding are transmitted from the detected devices, the writing unit may combine the results according to identifiers assigned to the results and write the combined results to the second recording medium.

With the stated structure, the identifier is given to each of the divided portions of the digital stream. As a result, it is possible to combine the portions of the digital streams in the correct order.
Here, the predetermined points on the playback time axis may be points where copy control information included in the digital stream changes.

Here, the conversion parameters may be combinations of patterns of encoding unit and encoding bit rates.
With the stated structure, the recording apparatus assigns different conversion parameters to the assist devices, and have the devices perform the transcoding using the conversion parameters. As a result, it is possible to have the devices perform the transcoding with a high compression rate.

### Brief Description of the Drawings

FIG. 1 is a system chart;
FIG. 2 shows an internal structure of a recording apparatus according to the present invention;
FIG. 3 shows a software structure of the recording apparatus;
FIG. 4 shows an example of a dubbing screen;
FIG. 5 shows an example of an available device capability list;
FIG. 6 shows division processing in the case of performing detection only once;
FIG. 7 shows an internal structure of an assist device;
FIG. 8 shows a software structure of the assist device;
FIG. 9 is a flowchart of processing performed by the recording apparatus;
FIG. 10 is a flowchart of processing for available device detection;
FIG. 11 is a flowchart of distributed processing allocation;
FIG. 12 shows the division processing in the case of performing detection a plurality of times;
FIG. 13 is a flowchart of distributed processing transmission;
FIG. 14 is a flowchart of distributed processing result combination;
FIG. 15 is a flowchart of processing performed by the assist device;
FIG. 16 shows division processing in the case of performing the detection a plurality of times;
FIG. 17 shows division processing in the case of considering performance ratio;
FIG. 18 shows an example of dubbing screen;
FIG. 19 shows an example of a list for selecting an assistance device;
FIG. 20 shows an example of predicted values of processing times;
FIG. 21 is a flowchart showing a transcode execution in the case where the recording apparatus includes a plurality of processors;
FIG. 22 is an example of a warning screen; and
FIG. 23 shows an allocation to the assist device in the case of a copyrights-protected content.

### Explanation of References

- 100: RECORDING APPARATUS
- 200: DIGITAL TV
- 300: PERSONAL COMPUTER
- 400: GAME MACHINE
- 500: HOME NETWORK
- 101: TUNER
- 102: MICROCOMPUTER SYSTEM
- 102a: CPU
- 102b: ROM
- 102c: RAM
- 103: TRANSCODER
- 104: BUFFER
- 105: COMMUNICATION UNIT
- 106: SOURCE DRIVE (HDD)
- 107: TARGET DRIVE
- 107a: DVD
- 107b: SD MEMORY CARD
- 201: MICROCOMPUTER SYTEM
- 201a: CPU
- 201b: ROM
- 201c: RAM
- 202: EEPROM
- 202a: SOFTWARE TRANSCODER
- 202b: CONTROL PROGRAM
- 203: COMMUNICATION UNIT
- 111: RECORDING CONTROL UNIT
- 112: DISPLAY CONTROL UNIT
- 113: AVAILABLE DEVICE DETECTION UNIT
- 114: DISTRIBUTION PROCESSIONG CONTROL UNIT
- 114a: DISTRIBUTED PROCESSING ALLOCATION UNIT
- 114b: DISTRIBUTED PROCESSING TRANSMISSION UNIT
- 114c: DISTRIBUTED PROCESSING RESULT RECEPTION UNIT
- 114d: DISTRIBUTED PROCESSING RESULT COMBINING UNIT
- 115: ENCRYPTION PROCESSING UNIT
- 116: DEVICE UNIQUE KEY MANAGING UNIT
- 211: AVAILABLE DEVICE CAPABILITY NOTIFYING UNIT
- 212: DISTRIBUTED PROCESSING CONTROL UNIT
- 212a: DISTRIBUTED PROCESSING RECEPTION UNIT
- 212b: DISTRIBUTED PROCESSING EXECUTION UNIT
- 212c: DISTRIBUTED PROCESSING RESULT TRANSMISSION UNIT
- 213: ENCRYPTION PROCESSING UNIT
- 214: DEVICE UNIQUE KEY MANAGING UNIT

### Best Mode for Carrying Out the Invention

### First Embodiment

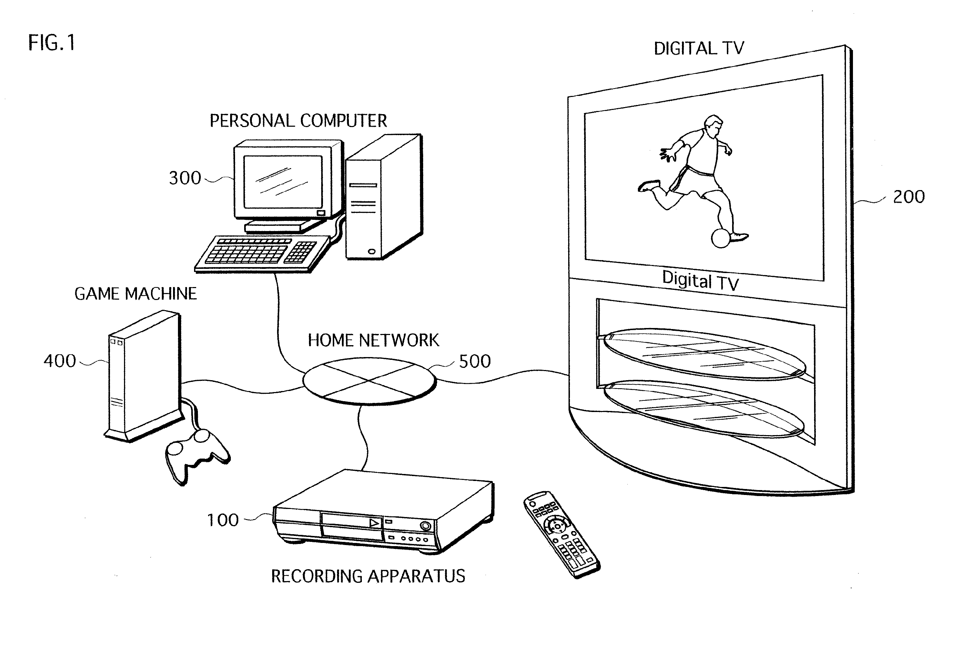

The following describes an embodiment of a recording apparatus 100 according to the present invention. Firstly, of the implementation acts of the recording apparatus of the present invention, a usage act is described. The recording apparatus 100 according to the first embodiment is used in a system as shown in FIG. 1. The system shown in FIG. 1 includes the recording apparatus 100, a digital TV 200, a personal computer 300, a game machine 400 and a home network 500.

The recording apparatus 100 is a device that receives broadcast digital streams and writes the streams in a recording medium. The recording apparatus 100 also writes a copy of the written digital streams in another recording medium. For example, the recording apparatus 100 is capable of converting a digital stream recorded on a HDD in the MPEG-2 TS format to a digital stream in the MPEG2-PS format for a DVD, and writing the converted digital stream in the DVD. The recording apparatus 100 divides a digital stream to be transcoded into portions, and transmits the portions respectively to a plurality of devices (hereinafter called "the assist devices") connected together by the network 500, namely the digital TV 200, the personal computer 300, and the game machine 400. Then, each of the assist devices performs the transcoding. The transcoding can be accelerated by distributed processing performed by the assist devices.

The digital TV is a TV receiver that includes a digital tuner and is controlled by software.
If a portion of the digital stream is transmitted from the recording apparatus 100, the digital TV 200 receives the portion, transcodes the portion, and transmits the result of the transcoding to the recording apparatus 100.
The personal computer 300 is a low-price computer for personal use, and performs calculations in accordance with computer programs. If a portion of the digital stream is transmitted from the recording apparatus 100, the personal computer 300 receives the portion, transcodes the portion, and transmits the result of the transcoding to the recording apparatus 100.

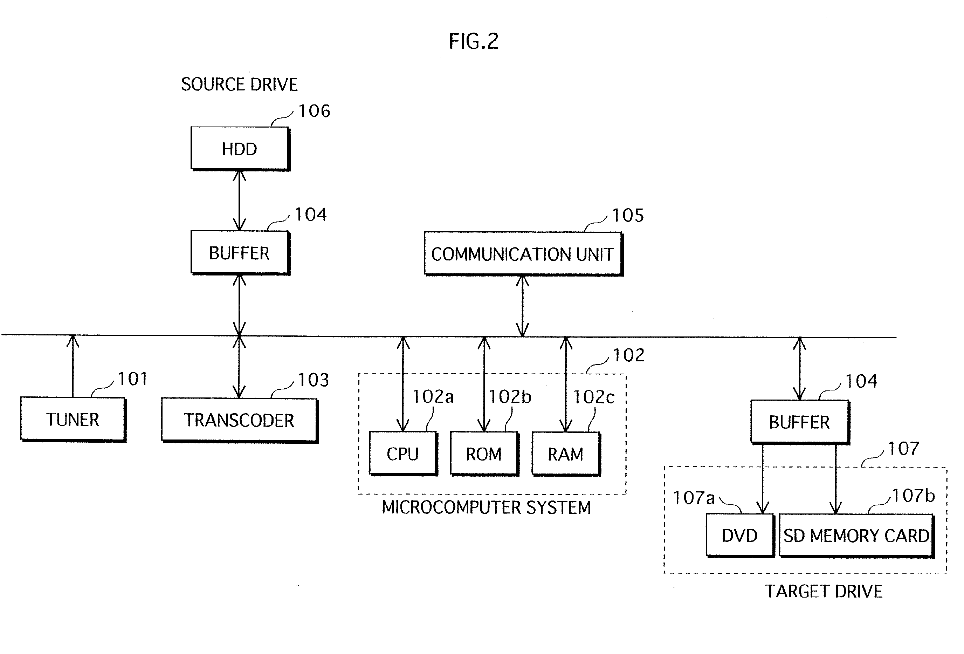

The game machine 400 is a computer that can be used as a game machine for home use. The game machine 400 is used with connected with a TV. If a portion of the digital stream is transmitted from the recording apparatus 100, the game machine 400 receives the portion, transcodes the portion, and transmits the result of the transcoding to the recording apparatus 100.
This completes the description of the usage act of the recording apparatus 100. Next, a production mode is described. FIG. 2 shows an internal structure of the recording apparatus 100 according to the present invention. As FIG. 2 shows, the recording apparatus 100 according to the present invention includes a tuner 101, a microcomputer system 102, a transcoder 103, a buffer 104, a communication unit 105, a source drive 106 and a target drive 107. The recording apparatus 100 can be industrially manufactured based on the internal structure shown in FIG. 2. Among these components, a CPU 102a, a ROM 102b, a RAM 102c and the transcoder 103 can be structured as a system LSI.

The tuner 101 performs processing for receiving digital streams.
The microcomputer system 102 includes the CPU 102a, the ROM 102b, and the RAM 102c. A program stored in the ROM 102b is read into the CPU 102a, and the functions of the microcomputer system 102 are realized by the cooperation among the program and hardware resources.
The transcoder 103 transcodes digital streams.

The buffer 104 temporarily stores data.
The communication unit 105 includes a LAN card, a modem and so on, and communicates with the plurality of devices connected together by the home network 500.
The source drive 106 is a HDD, and reads and writes digital streams. The processing for reading and writing includes processing for writing, to the HDD, a digital stream transferred via a bus, and processing for reading a digital stream recorded on the HDD and transfer the stream to the bus.

The target drive 107 records a digital stream that is the same as the digital stream that has been recorded on the source drive 106. The target drive 107 includes a DVD 107a and a SD memory card 107b. The DVD 107a is a detachable recording medium. Specifically, the DVD 107a can be realized by using a rewritable DVD such as a DVD-RAM, a DVD-RW, a DVD+RW, and a writable DVD such as a DVD-R and a DVD+R. The SD memory card 107b stores a digital stream that is the same as the digital stream that has been recorded on the source drive 106.

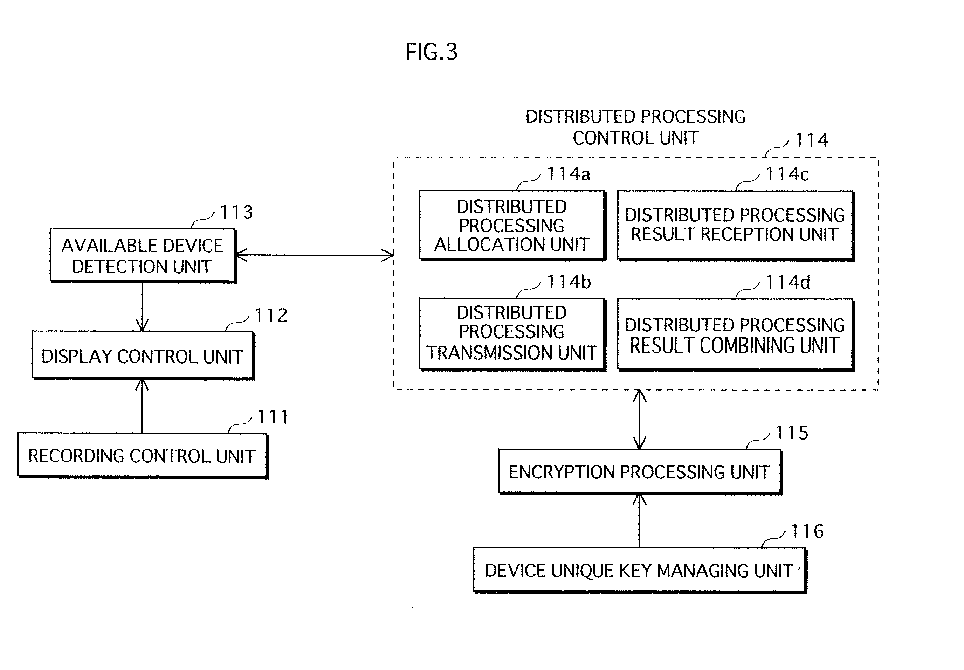

This concludes the description of the hardware structure of the recording apparatus 100. Next, the software structure is described. As FIG. 3 shows, the recording apparatus 100 includes a recording control unit 111, a display control unit 112, an available device detection unit 113, a distributed processing control unit 114, an encryption processing unit 115 and a device unique key managing unit 116.
The recording control unit 111 controls a series of processing relating to recording.

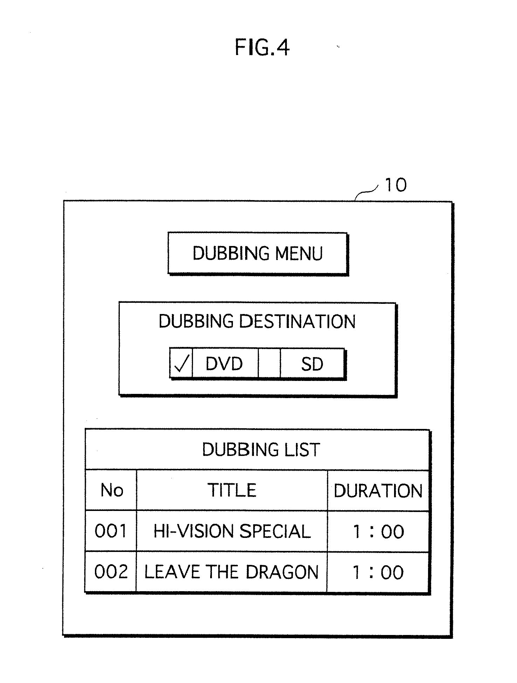

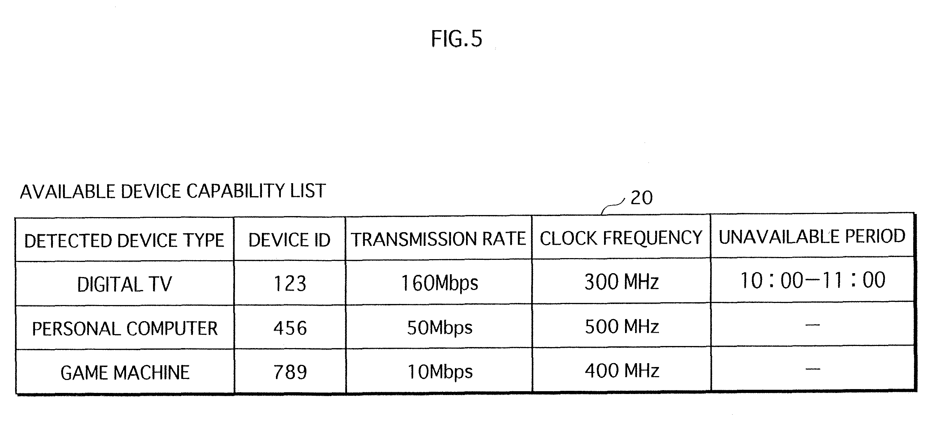

The display control unit 112 displays a dubbing menu screen and so on. FIG. 4 shows an example of a dubbing menu screen 10. Firstly, the user selects a recording medium as a target of the dubbing. Next, the user selects a title of a digital stream to be transcoded. After the operations relating to the dubbing are completed, the available device detection unit 113 starts detection of the assist devices.
The available device detection unit 113 transmits a detection message to the home network 500, and detects whether the assist devices are available for distributed processing. Furthermore, the available device detection unit 113 creates an available device capability list 20. FIG. 5 shows an example of the list 20 of the capabilities of the available devices. Note that the detection of the available devices may be performed before the transcode is performed, and may be periodically performed during the transcoding as well.

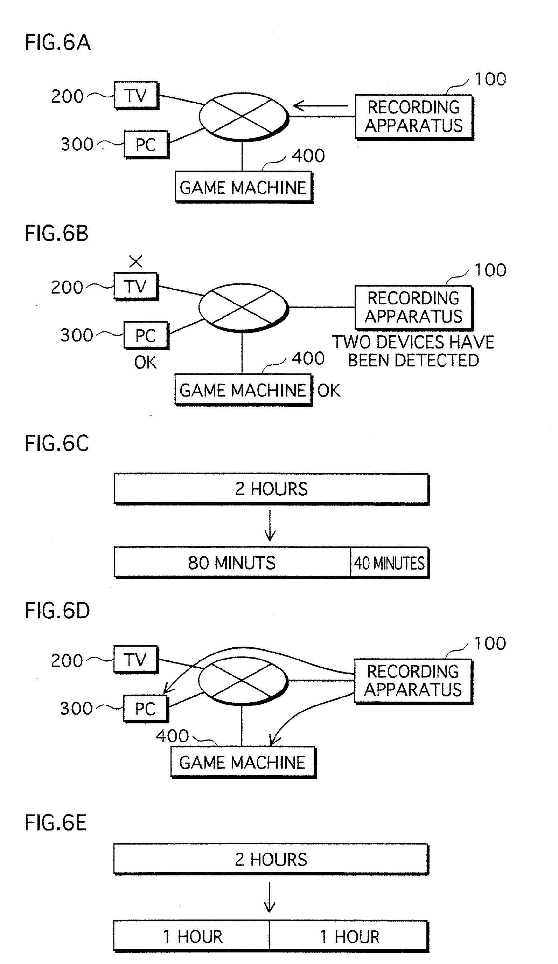

The distributed processing control unit 114 includes a distributed processing allocation unit 114a, a distributed processing transmission unit 114b, a distributed processing result reception unit 114c and a distributed processing result combining unit 114d.
The distributed processing allocation unit 114a divides a digital stream to be transcoded at predetermined points on a playback time axis and allocates the portions to the detected devices. At this moment, the distributed processing allocation unit 114a assigns an identifier to each of the portions. The time length of the portion to be allocated to each device is determined based on a ratio of a capability value of each single device to the total of capability values of all the detected devices. FIG. 6 shows an example. Here, it is assumed that the detection by the available device detection unit 113 is performed only once before the transcoding is performed. It is also assumed that the target of the transcoding is a digital stream having a length of two hours. Firstly, as FIG. 6A shows, a detection message is transmitted to the devices connected by the network. As shown in FIG. 6B, if the personal computer 300 and the game machine 400 are the devices detected by the available device detection unit 113, and the capability ratio is 2:1, the distributed processing allocation unit 114a allocates, of 2hours of the digital stream, 80 minutes to the personal computer 300 and 40 minutes to the game machine 400 as FIG. 6C shows, and the distributed processing transmission unit 114b transmits the portions to each of the devices as FIG. 6D shows. Note that the time length of the portion may be a value obtained by simply dividing the total playback time of the digital stream by the number of the detected devices as FIG. 6E shows. Also, since a period in which the assist device is unavailable has been detected, it is possible to allocate a comparatively short data to a device that will become unavailable in the progress. The following explains a boundary between the portions of the digital stream to be divided by the distributed processing allocation unit 114a. Switching points of the GOP and points where copy control information in the digital stream changes may be set as the boundary between the portions. The points where the copy control information changes are points where CopyFree or CopyNever switches to the other. If the copy control information indicates "CopyFree", it is possible to record or dub the digital stream to the recording apparatus 100 without restriction. On the other hand, if the copy control information indicates "CopyNever", it is impossible to record or dub the digital stream. Since such a point of change is set as the boundary for the division, the transcoding is performed in units in each which the copy control information is consistent. This concludes the description of the distributed processing allocation unit 114a.

The distributed processing transmission unit 114b transmits the portions of the digital streams allocated to each device, to each device.
The distributed processing result reception unit 114c receives the portions of the digital stream that has been transcoded and transmitted by the assist device.
The distributed processing result combining unit 114d combines the transcoded portions of the digital stream received by the distributed processing result reception unit 114c, to restore a complete transcoded digital stream. At this moment, whether to combine or not is determined by checking the identifiers respectively assigned to the portions of the digital stream.

The encryption processing unit 115 applies an appropriate encryption when transmitting the portions of the digital stream and receiving the transcoded portions of the digital stream. The encryption processing unit 115 assigns a unique encryption key to each of the assist device, and using the unique encryption keys, encrypts the portions of the digital stream allocated to the assist devices.
The device unique key managing unit 116 manages the keys unique to the assist devices.

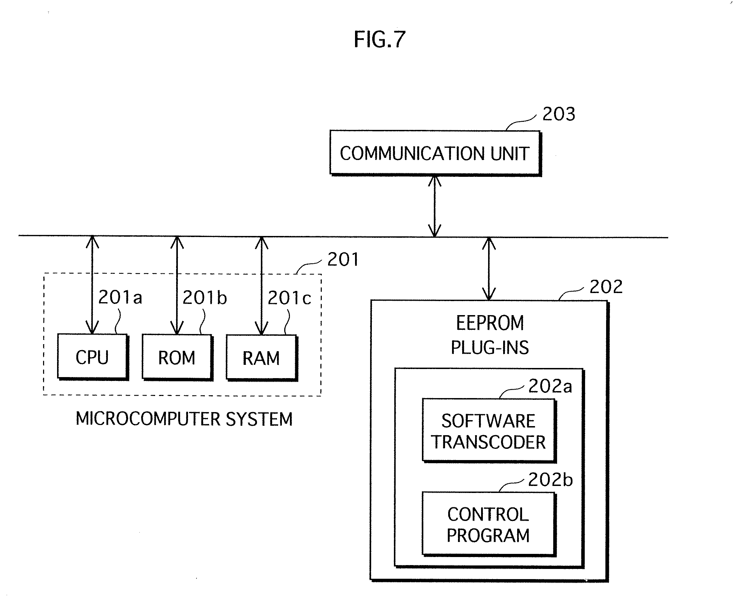

Next, the internal structure of the assist device is described. FIG. 7 shows the internal structure of the assist device. As FIG. 7 shows, the assist device includes a microcomputer system 201, an EEP ROM 202 and a communication unit 203.
The microcomputer system 201 includes a CPU 201a, a ROM 201b and a RAM 201c. A program stored in the ROM 201b is read into the CPU 201a, and the functions of the microcomputer system201 are realized by the cooperation among the program and hardware resources.

The EEPROM 202 incorporates plug-ins therein, and includes a software transcoder 202a and a control program 202b.
The communication unit 203 is structured with a LAN card, a modem, and so on, and communicates with a plurality of devices connected together by the home network 500.
This concludes the description of the hardware structure of the assist device. The following describes the software structure.

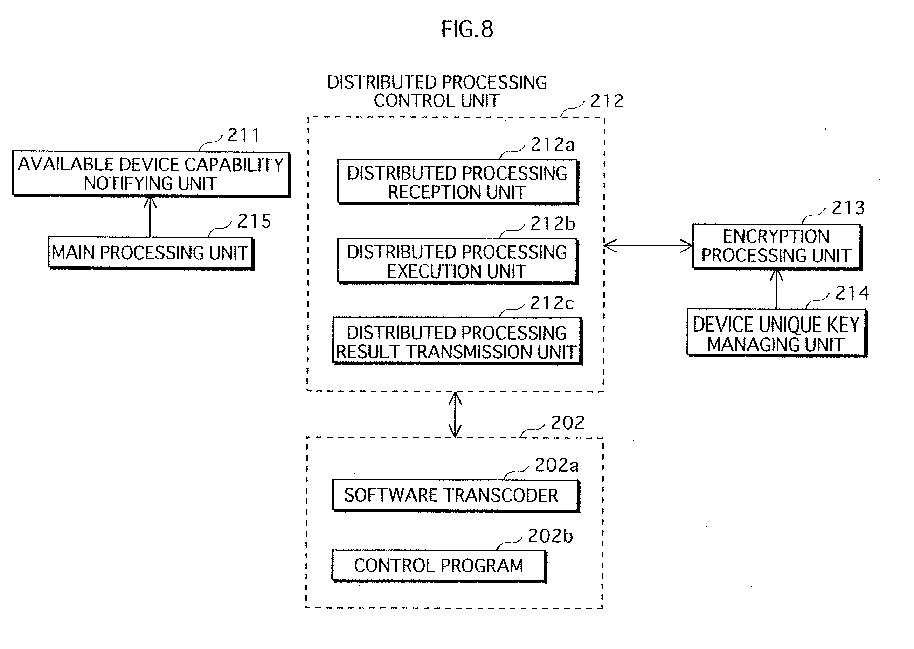

As FIG. 8 shows, the assist device includes an available device capability notifying unit 211, a distributed processing control unit 212, an encryption processing unit 213, a device unique key managing unit 214, a software transcoder 202a, a control program 202b, and a main processing unit 215.
On reception of an inquiry about capability from the recording apparatus 100, the available device capability notifying unit 211 notifies the recording apparatus 100 of the capability that the assist device can provide to the recording apparatus 100, based on the usage status of the main processing unit 215. Thecapabilityis, for example, the transmission rate on the transmission medium by which the devices are connected, the clock frequency of the device, and the amount of the memory built in the device and so on.

The distributed processing control unit 212 includes a distributed processing reception unit 212a, a distributed processing execution unit 212b, and a distributed processing result transmission unit 212c.
The distributed processing reception unit 212a receives a portion of the digital stream to be transcoded received from the recording apparatus 100, and a conversion parameter for transcoding the portion. A main example of the conversion parameter for the transcoding is a parameter for determining the image quality. In addition, other parameters to be designated at the transcoding, such as parameters for determining the resolution and the format type may be used.

The distributed processing execution unit 212b transcodes the portion of the digital stream received by the distributed processing reception unit 212a, using the transcode conversion parameter also received by the distributed processing reception unit 212a.
The distributed processing result transmission unit 212c transmits the portion of the digital stream that has been transcoded to the recording apparatus 100.

The encryption processing unit 213 decrypts the portion of the digital stream that has been encrypted by the recording apparatus 100, using the key unique to the assist device.
The device unique key managing unit 214 manages the key unique to the device.
The software encoder 202a transcodes the digital stream.
The control program 202b controls the software encoder 202a.

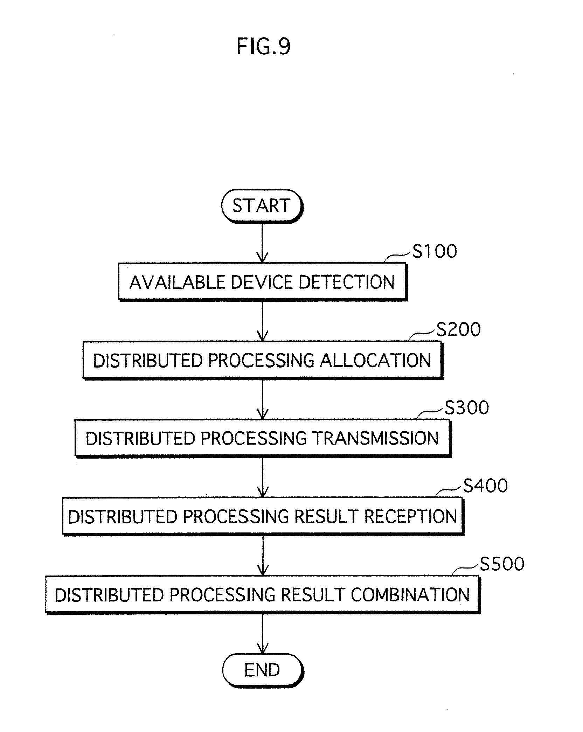

The main processing unit 215 performs processing relating to the original purpose of the assist device. For example, in the case of the digital TV 200, the main processing unit 215 performs processing relating to the TV functions, and in the case of the game machine 400, the main processing unit 215 performs processing relating to the game functions.
Next, the processing flow of the recording apparatus 100 is described with reference to the flowchart of FIG. 9.

Firstly, the recording apparatus 100 detects devices available for the distributed processing from the assist devices, by using the available device detection unit 113 (S100). Next, the distributed processing allocation unit 114a divides the digital stream to be transcoded into portions, and allocates the portions to the devices detected by the available device detection unit 113 (S200). The distributed processing transmission unit 114b transmits the portions of the digital stream allocated to the assist devices, to the assist devices respectively (S300). The distributed processing result reception unit 114c receives the portions of the digital stream that have been transcoded by the respective assist devices (S400). Then, the distributed result combining unit 114d combines the received portions of the digital stream together (S500).

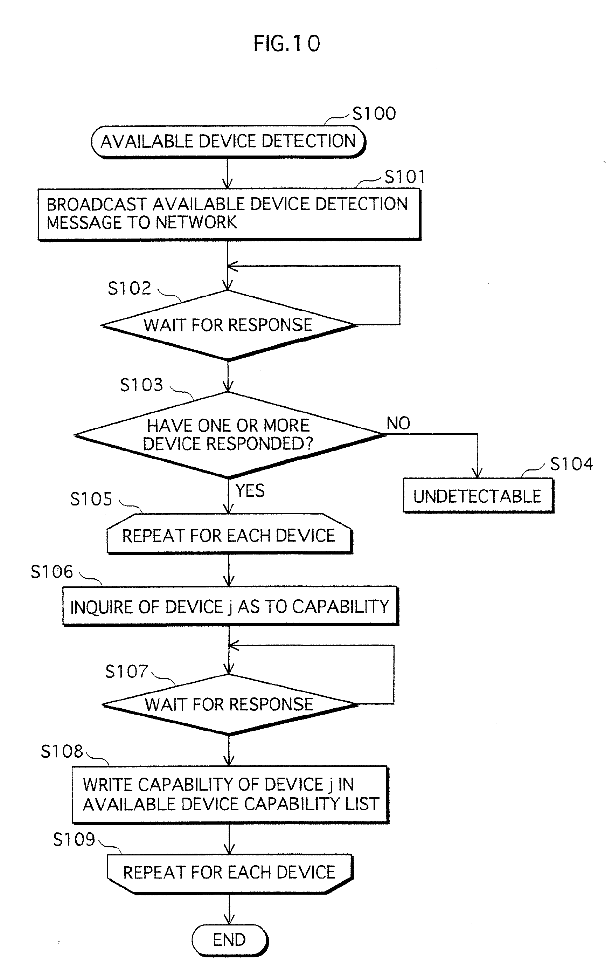

Next, processing procedure for the available device detection is specifically described with reference to the flowchart of FIG. 10. In this flowchart, a sign *j* represents a variable specifying a single device. Firstly, the available device detection unit 113 broadcasts an available device detection message to the home network 500 (S101). The available device detection unit 113 waits for a response (S102), and judges whether one or more devices have responded. If no device has responded, the available device detection unit 113 finishes the detection (S104). If one or more devices have responded (S103), the available device detection unit 113 repeats Steps S105 to S109 for each of the detected devices. Firstly, the available device detection unit 113 inquires of the device j as to the capability of the device *j* (S106). The available device detection unit 113 waits for a response (S107), and describes the capability of the device *j* in a list of the capabilities of the available devices (S108).

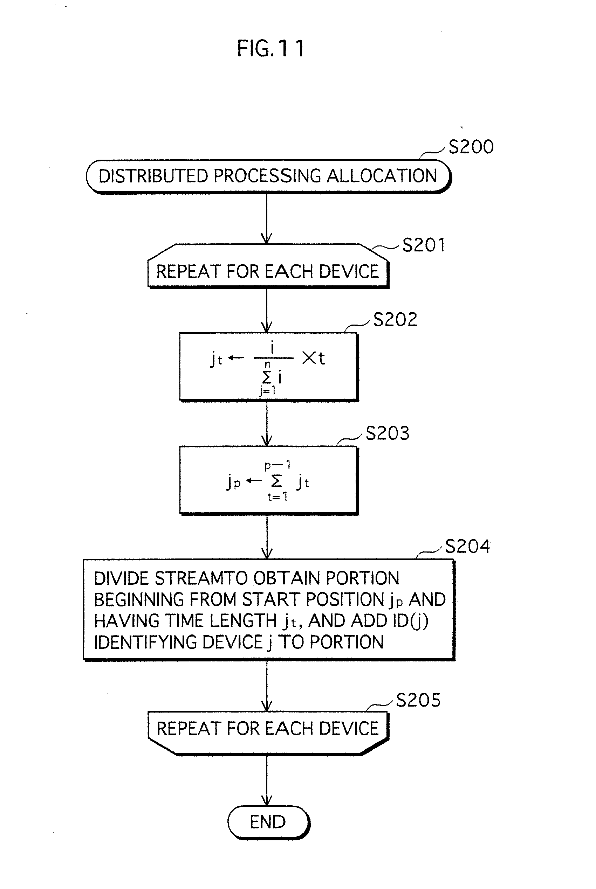

Next, the flow of the distributed processing allocation is specifically described with reference to the flowchart of FIG. 11. Here, note that the detection of the available devices is performed only once before the transcoding is performed. In this flowchart: a sign j is a variable specifying a single device; a sign t is a variable representing a playback time of the digital stream; a sign n is a variable representing the total number of the detected devices; a sign i is a variable representing a capability of a single device; a sign *jₜ* is a variable representing a time length to be allocated to a single device; a sign jp is a variable representing a start position of the allocated time length; and a sign ID(*j*) represents an identifier assigned to the device j. The distributed processing allocation unit 114a repeats Steps S201 to S205 for each device. Firstly, the distributed processing allocation unit 114a determines the time length to be allocated to each device based on the ratio of the capability value of each single device to the total of the capability values of the detected devices (S202). Next, the distributed processing allocation unit 114a calculates the start position *jₚ* of the device *j* (S203). Then, the distributed processing allocation unit 114a assigns the identifier ID(*j*) to the acquired digital stream (S204).

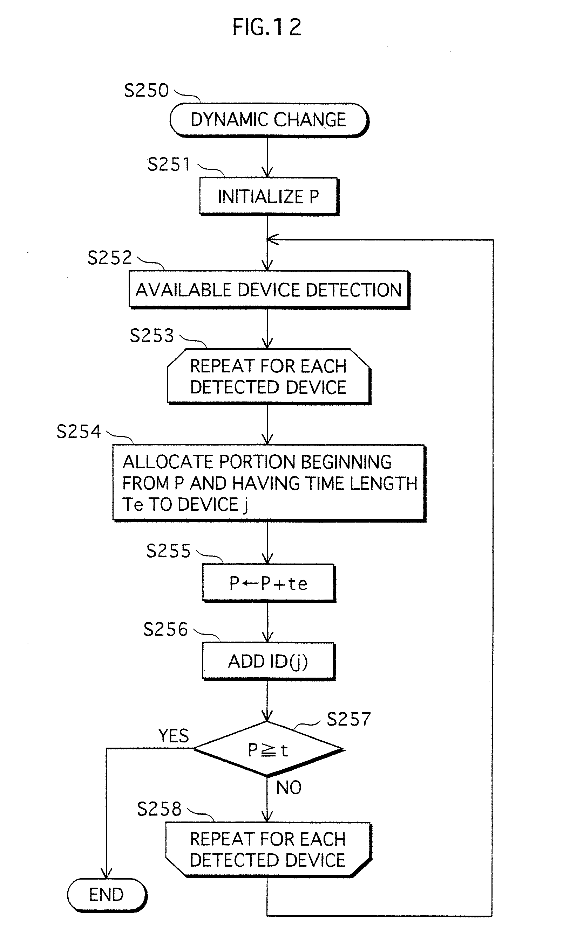

Next, the flow of the available device detection in the case where the detection is periodically performed during the transcoding is described, with reference to the flowchart of FIG. 12. In this flowchart: a sign j is a variable specifying a single device; a sign te is a variable representing an interval time between detections of the available devices; a sign *t* is a variable representing a playback time of the digital stream; a sign ID(*j*) represents an identifier assigned to the device *j*; and a sign *p* represents a pointer. Firstly, the available device detection unit 113 initializes the poin tp (S251) , and detects available devices (S252). Next, the available device detection unit 113 repeats Steps S253 to S258 for each of the detected devices. Firstly, the distributed processing allocation unit 114a allocates a portion of the digital stream beginning from the point *p* and having a time length te to the device *j* (S254), and adds the time length *te* to the point *p* (S255). The distributed processing allocation unit 114a assigns the identifier ID(*j*) to the allocated portion of the digital stream (S256). Next, the distributed processing allocation unit 114a judges whether the pointer *p* is equal to or more than the playback time of the digital stream (S257). If thepointerpis less than the playback time, the distributed processing allocation unit 114a moves to S258. If the point *p* is equal to or more than the playback time, the distributed processing allocation unit 114a finishes the processing.

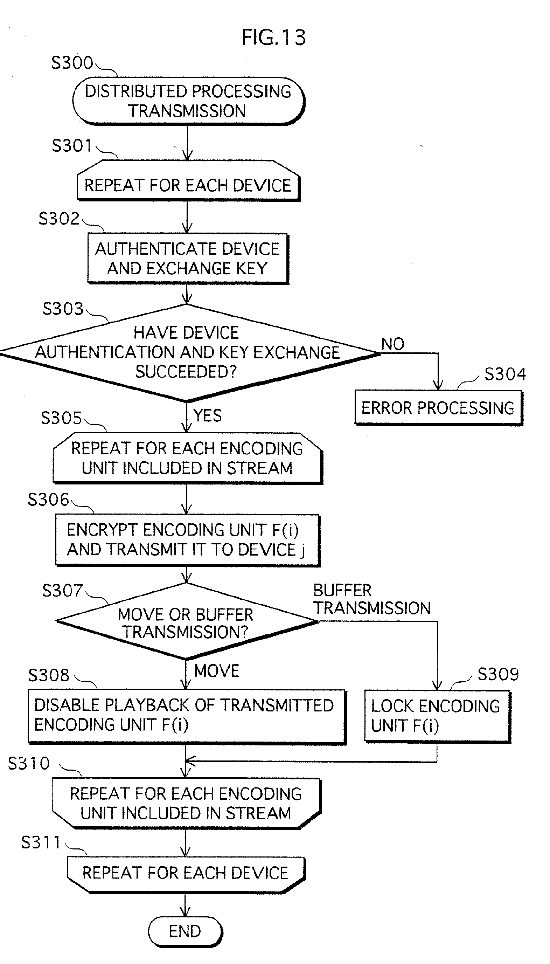

Next, the flow of the distributed processing transmission is described with reference the flowchart of FIG. 13. In this flowchart: a sign *j* is a variable specifying a single device; and a sign F(i) is a variable indicating a GOP to be transcoded. The distributed processing transmission unit 114b repeats Steps S301 to S311 for each of the detected devices. Firstly, the distributed processing transmission unit 114b authenticates the assist device, and exchanges the key with the assist device (S302). Then, the distributed processing transmission unit 114b judges whether the device authentication and the key exchange have succeeded (S303). If failing the device authentication and the key exchange, the distributed processing transmission unit 114b performs error processing (S304). If succeeding the device authentication and the key exchange, the distributed processing transmission unit 114b repeats the following Steps S305 to S310 for each of encoding units included in the digital stream. Firstly, the distributed processing transmission unit 114b encrypts the encoding unit F(i) and transmits it to the device j (S306). Then, the distributed processing transmission unit 114b judges whether the transmission is "move" or "buffer transmission" (S307). If the transmission is the "buffer transmission", the distributed processing transmission unit 114b locks the encoding unit F(*i*) (S309). If the transmission is the "move", the distributed processing transmission unit 114b disables the playback of the encoding unit F(i) that has been transmitted (S308). To disable the playback of the encoding unit F(i), the distributed processing transmission unit 114b overwrites all the data with zeros.

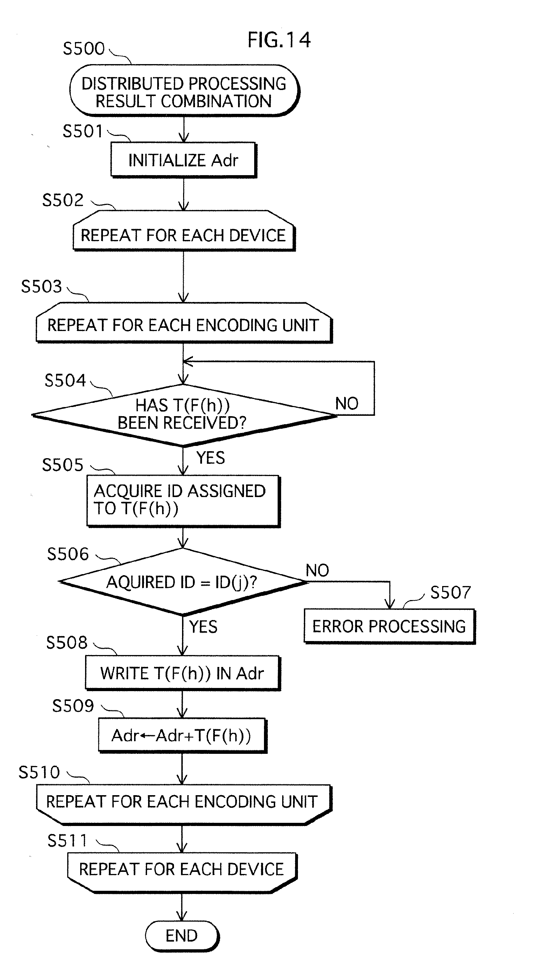

Next, the flow of the distributed processing result combination is described with reference to the flowchart of FIG. 14. In this flowchart: a sign j is a variable specifying a single device; and a sign Adr is a variable representing an address of the destination where the transcoded digital stream is to be written; a sign T(F(h)) is a variable representing an encoding unit that has been transcoded; and a sign ID(*j*) represents an identifier assigned to the device *j*. Firstly, the distributed processing result combining unit 114d initializes the Adr (S501). Next, the distributed processing result combining unit 114d repeats Steps S502 to S511 for each device, repeats Steps S503 to S510 for each encoding unit. The distributed processing result combining unit 114d receives the T(F(h)) (S504), and acquires the ID(*j*) assigned to T(F(h))(S505). The distributed processing result combining unit 114d judges whether the acquired ID(j) is an ID assigned to the device *j* (S506). If the ID(*j*) is an error, the distributed processing result combining unit 114d performs the error processing (S507). If the ID(*j*) is correct, the distributed processing result combining unit 114d writes the T(F(h)) at the location indicated by the Adr (S508), and adds T(F(h)) to Adr (S509).

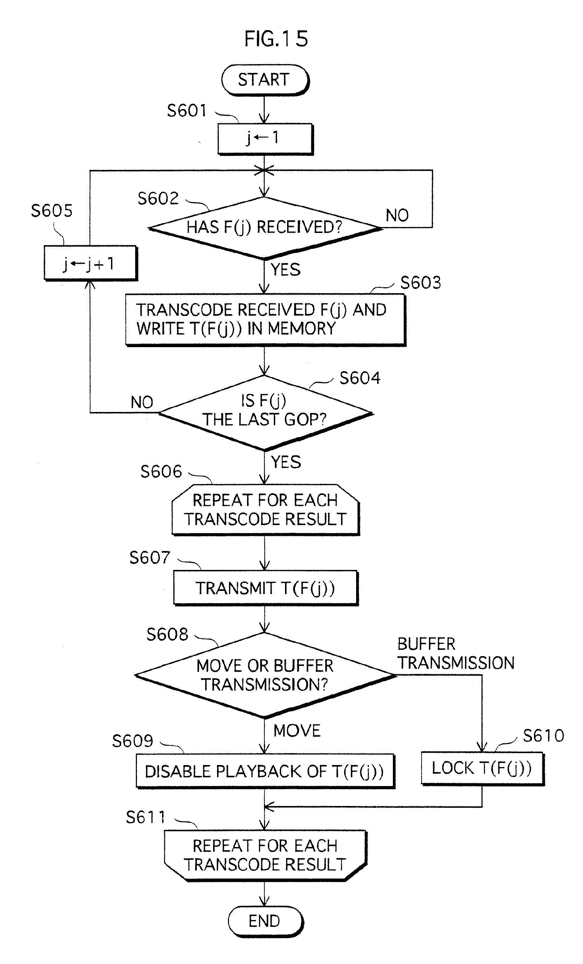

Next, operations performed by the assist device are described, with reference to FIG. 15. In this flowchart: a sign F(*j*) is a variable indicating a GOP to be transcoded; and a sign T(F(*j*)) is a variable representing a result of the transcoding of F(*j*). Firstly, the assist device initializes the variable *j* (S601). Next, the assist device receives F(*j*) (S602), transcodes the received F(*j*), and writes T(F(*j*)) in the memory (S603). Next, the assist device judges whether F(*j*) is the last GOP or not (S604). If F(*j*) is not the last GOP, the assist device increments *j* by one (S605), and moves to S602. If F(*j*) is the last GOP, the assist device performs the following Steps S606 to S611 for each of the transcode results. Firstly, the assist device transmits T(F(*j*)) to the request source device (S607). The assist device j judges whether the transmission is "move" or "buffer transmission" (S608). If the transmission is the "buffer transmission", the assist device locks T(F(i)) (S610). If the transmission is the "move", the assist device disables T(F(i)) (S609).

As described above, in the first embodiment, the transcoding is distributed-processed by a plurality of devices connected together by the home network 500. Therefore, it is possible to accelerate the transcoding without setting a plurality of processors in the recording apparatus.

### Second Embodiment

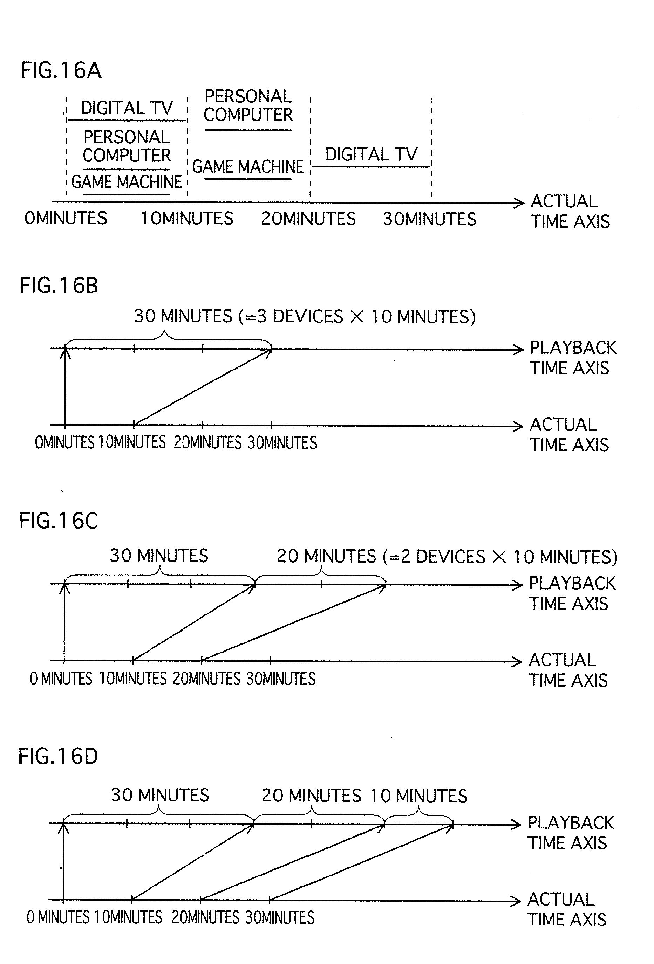

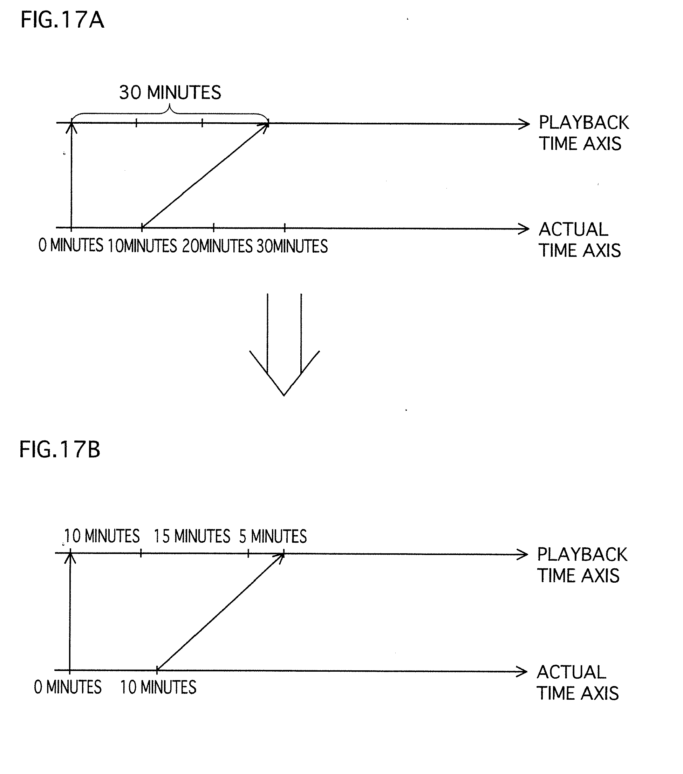

In the first embodiment, the detection by the available device detection unit 113 is performed only once before the transcoding is performed. In the second embodiment, thedetectionbytheavailable device detection unit 113 is periodically performed even during the transcoding. FIG. 16 shows an example where the detection is periodically performed. FIG. 16A shows devices detected by each of the detections performed every 10 minutes. At the pint of 0 minute, three devices, namely the digital TV 200, the personal computer 300 and the game machine 400 have been detected. At the point when 10 minutes have elapsed, two devices, namely the personal computer 300 and the game machine 400 have been detected. At the point when 20 minutes have elapsed, only one device, namely the digital TV 200 has been detected. FIG. 16B shows allocation of the portions of the digital streams to the three devices that have been detected at the time when 0 minutes have elapsed. The portions of the digital stream are respectively allocated to the three devices, each portion having a time length of 10 minutes. It is possible to transcode the digital streams for 30 minutes of the playback time in 10 minutes of the actual time, by performing the processing by three devices. FIG. 16C shows the allocation of the portions of the digital stream to the two devices that have been detected at the time when 10 minutes have elapsed, each portion having a time length of 10 minutes. FIG. 16D shows the allocation of the portions of the digital stream to the device that has been detected at the time when 20 minutes have elapsed, each portion having a time length of 10 minutes. In this way, it is possible to transcode the digital stream for 1 hour in 30 minutes.
If some of the devices can not finish the transcoding in 10 minutes due to low performance, such devices will not be detected by the available device detection because they will be performing the transcoding. Such devices will continue the transcoding. Here, note that the total time to be allocated to the detected devices are calculated, and the portions may be allocated to the devices based on a ratio of a capability value of each device to the total of capability values of all the detected devices. FIG. 17A and FIG. 17B show allocation performed with consideration of the capabilities of the devices. In FIG. 17B, the way of dividing the digital stream is determined not only based on the number of the detected devices, but also with consideration of the capabilities of the devices. For example, if the capability ratio of the detected three devices is 2:3:1, the times to be allocated to the devices are 10 minutes, 15 minutes and 5 minutes respectively. By taking the capabilities in consideration, it becomes possible to more efficiently perform the transcoding.

As described above, in the second embodiment, it is not necessary that the devices are always available. It is possible to accelerate use the devices for the purpose of the distributed processing only when they are available. Accordingly, it is possible to flexibly make use of the capabilities of the devices onlywhen they are available.

### Third Embodiment

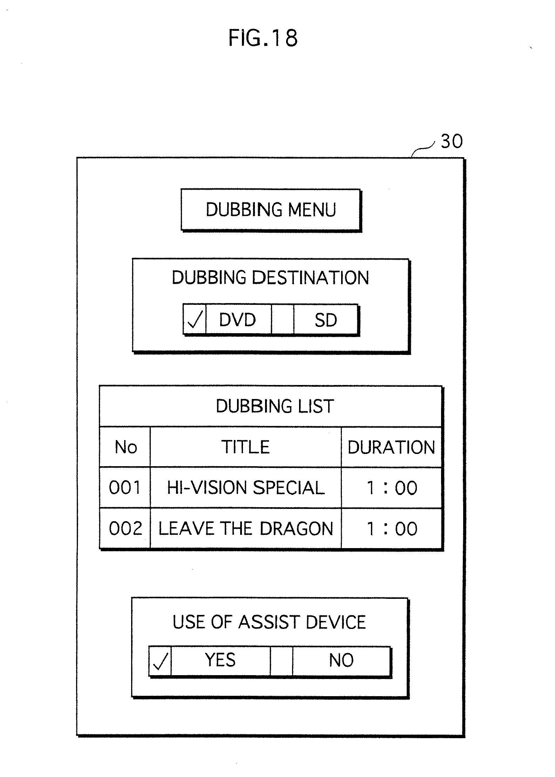

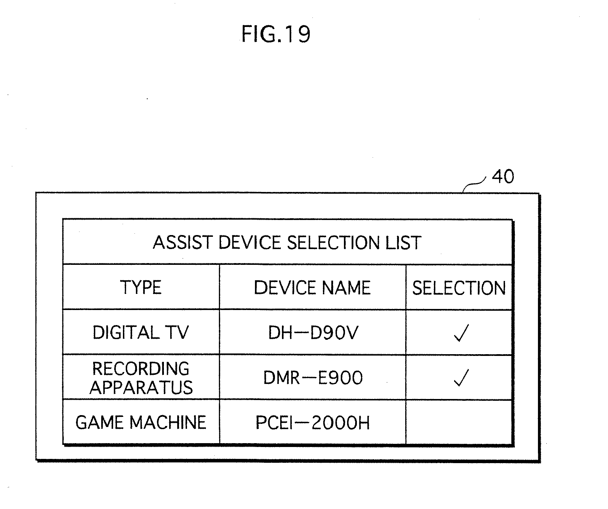

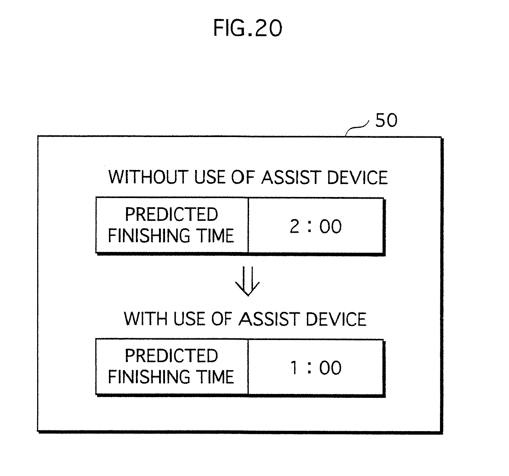

In the first embodiment, the recording apparatus 100 does not perform the transcoding, the whole processing is distributed to the assist devices. On the other hand, in the third embodiment, the recording apparatus 100 performs the transcoding as well. FIG. 18 shows an example of a dubbing screen 30 displayed by the display control unit 112 of such a case. Firstly, the user chooses a recording medium to which the dubbing is performed, and the title of the digital stream to be transcoded. Then, the user can choose whether the transcoding is to be performed by the recording apparatus 100, or performed with use of the assist devices. If the user chooses not to use the assist devices, only the recording apparatus 100 performs the transcoding. If the user chooses to use the assist devices for the distributed processing, the available device detection unit 113 detects the available devices, and a list of the available devices is presented to the user. If the recording apparatus 100 can perform the transcoding, the recording apparatus 100 is detected as an available device as well. If the recording apparatus 100 can not perform the transcoding because the recording apparatus 100 is recording the broadcast digital stream, the recording apparatus 100 is not to be detected as a device that can be used for the distributed processing. FIG. 19 shows an example of a assist device selection list screen 40. The user selects a device to be used for the distributed processing from the list. For example, the user selects the device by ticking a check box. Moreover, the display control unit 112 calculates and displays, as to the selected device, a predicted time required for transcoding the whole digital stream. FIG. 20 shows an example of the predicted time required for the transcoding.

### Fourth Embodiment

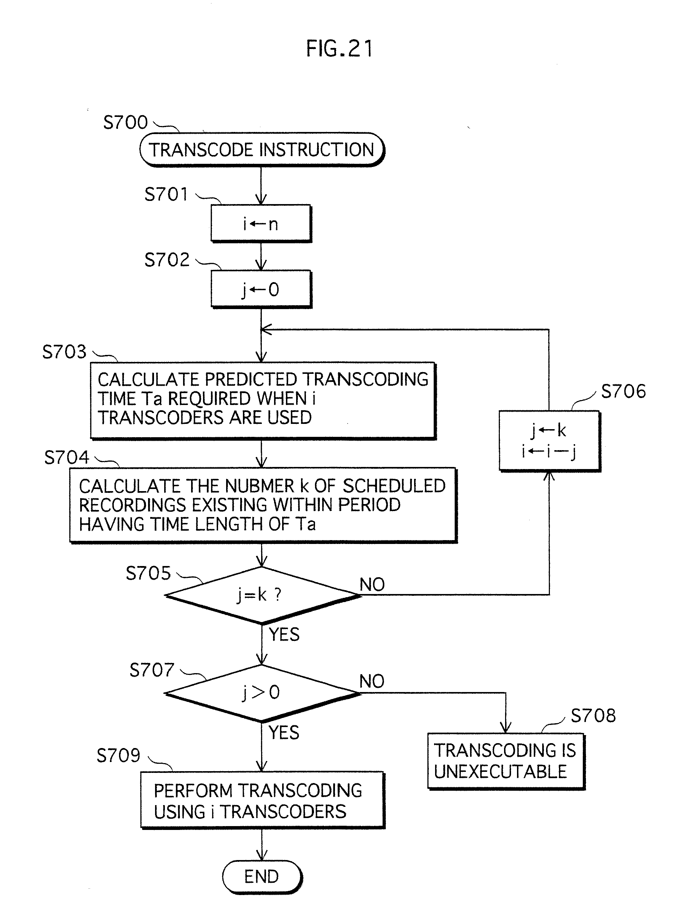

In the first embodiment, the distributed processing is performed by the devices connected to the recording apparatus via the network. On the other hand, the fourth embodiment is the case where the recording apparatus 100 is equipped with a plurality of processor inside, and the processors perform the distributed processing for the transcoding. FIG. 21 is a flowchart showing the flow of transcoding performed by the recording apparatus 100. In this flowchart: a sign *i* is a variable representing the number of available transcoders; a sign n is a variable representing the maximum number of the transcoders; a sign j is a variable representing the number of unavailable transcoders; a sign Ta is a predicted transcoding time when i transcoders are used; and a sign *k* is a variable representing the number of scheduled recordings with in a period having a time length of Ta. Firstly, the recording apparatus 100 assigns n to i (S701), and assigns a value 0 to j (S702). Next, the recording apparatus 100 calculates the predicted transcoding time required when i transcoders are used (S703), and calculates the number *k* of the scheduled recordings existing within the period having a time length of Ta (S704). The recording apparatus compares *j* and *k,* and judges whether j is equal to k (S705). If *j* is not *k,* the recording apparatus 100 assigns *j* to *k,* and assigns i to i-j (S706), and moves to S703. If *j* is equal to *k*, the recording apparatus judges whether *i* is larger than 0 (S707). If *i* is not larger than 0, it is impossible to perform the transcoding (S708). If i is larger than 0, the recording apparatus 100 performs the transcoding using i transcoders (S709).

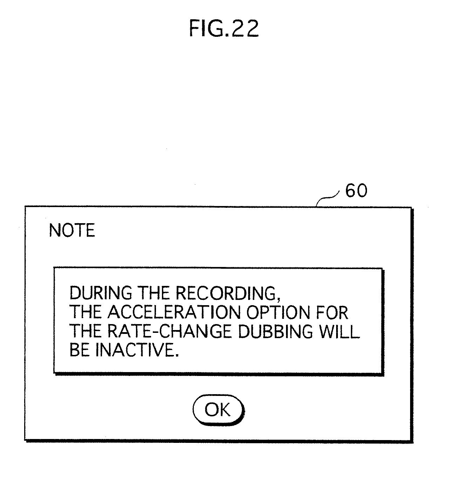

Note that the flowchart of FIG. 21 describes the case where any transcoder whose operations for scheduled recording and transcoding might overlap is never used. However, such transcoder may be used until the scheduled recording starts. Also, FIG. 21 describes the case where the number of the transcoders to be used is determined when the transcoding starts. However, the number of the trans coders to be usedmay be re-de termined every time the recording schedule is added even while the transcoding is performed. In this way, if the user adds, after the transcoding is started, a new recording schedule that overlaps the period in which the transcoding is performed, the display control unit 112 displays a warning message for the user, saying that the efficiency of the transcoding is decreased. FIG. 22 shows an example of a warning message 60.

As described above, in the fourth embodiment, it is possible to use the maximum number of the transcoders within a range of the number that does not affect the scheduled recording. As a result, it is possible to accelerate the transcoding.

### Fifth Embodiment

In the first embodiment, the digital stream is divided at predetermined points on a playback time axis and the portions of the digital stream are allocated to the assist devices respectively. In the fifth embodiment, the same portion is transcoded by a plurality of assist devices at the same time. In the description above, the transcoding is described as a single sequential processing for simplification. In fact, however, the transcoding includes the following two main steps:

One is the first transcode step of determining several parameters for encoding, and the other is the second transcode step of actually converting the format of a video to a different format based on the parameters determined by the first transcode step.
The followings are examples of the parameters determined by the first transcode step in the case of the H264 format:

One example is an encoding unit pattern represented by parameters specifying a frame, a block size, the number of blocks, and a pixel accuracy relating to reference blocks for the motion estimation.
Another example is a quantization rate (encoding bit rate) for a section indicated by the encoding unit pattern.

In the second transcode step, a transcoded content is generated from the original content by calculations such as the motion compensation, the DCT (discrete cosine transform), the quantization and the CABAC encoding with use of the parameters calculated in the first transcode step.
If the content is a copyrighted content, it is required that the total data amount of the original content and the transcoded content is not more than an amount permitted as a buffer data amount. Therefore, every time a certain amount of transcoded content is generated, the playback of the original content corresponding to the transcoded content should be disabled.

For the parallel transcoding, the recording apparatus 100 assigns one of the plurality of conversion parameters to each of the detected devices.
Firstly, the case where the content is not copyrighted is described. If the content is not copyrighted, it is possible to assign the same section of the original content to each of the detected devices duplicately. Of course, as described in the first embodiment, the amount of the sections that can be allocated to each assist device should be increased or decreased in accordance with the capability of the device. The assist device to which a processing task is assigned performs transcoding on the assigned content, and transmits the transcoded content to the recording apparatus 100. The recording apparatus 100 selects, from among contents transcoded using different parameters and transmitted from the assist devices, the most favorable content (e.g. with highest compression rate), and consider the selected content as the final transcoded content. Here, the parameter assigned to each assist device is not limited to one type. For example, a plurality of parameters may be assigned to the device, and the device may perform the transcoding using one of the parameters that has caused the most favorable result.

Note that the following measures may be taken to reduce the network traffic: Firstly, each assist device performs only the first transcode step on each of the assigned sections of the content, and transmits the result relating to the parameter (e.g. compression rate) to the recording apparatus 100. If a plurality of parameters are assigned, the device transmits the parameter that has caused the most favorable result, and the favorable result (e.g. compression rate). Then, the recording apparatus 100 instructs one of the assist devices that has reported the most favorable result among all the results transmitted from the assist devices to perform the second transcode step, and to transmit the transcoded content to the recording apparatus 100.

With this method, it becomes possible to reduce the network traffic and the data amount processed by each assist device.
On the other hand, regarding copyrighted content, the distributed processing should be performed with fulfilling the following two conditions, as described above.
The first condition is that the total data amount of the same section of the same content assigned to the plurality of assist devices should not be larger than an amount permitted as a buffer data amount.

The second condition is that the total data amount of the original content and the transcoded content existing in a single assist device should be not larger than an amount permitted as a buffer data amount.
To fulfill the first condition, the recording apparatus 100 assigns a section that has been processed by one assist device to another device, instead of simply assigning the section to each assist device.

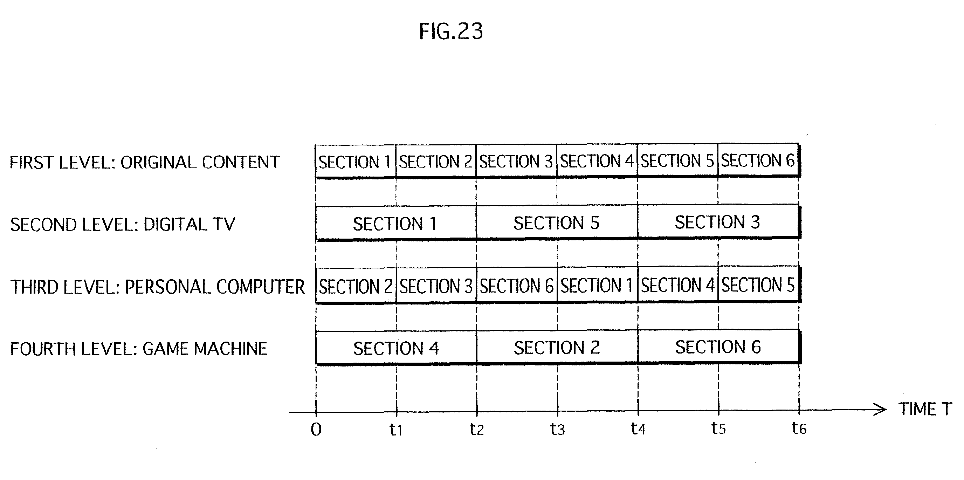

FIG. 23 shows the allocation of the copyrighted content to the assist devices. The first level shows the sections of the original content. The second level shows the sections assigned to the digital TV 200. The third level shows the sections assigned to the personal computer 300. The fourth level shows the sections assigned to the game machine 400. The first condition is fulfilled by assigning each section to the assist devices by shi fting the order instead of assigning each section to each assist device at the same time.

In this example, the content is divided into six sections. However, the number of sections may be determined in accordance with the ratio of the capabilities of the assist devices.
For example, FIG. 23 shows a case where the personal computer 300 has a capability twice as high as that of the digital TV 200 and the game machine 400. The number of the divisions can be obtained by the following calculation, for example:

The least common multiple of the capability ratio among the assist devices x The number of assist devices x N (N is a natural number not less than 1).
Note that the method for obtaining the number of the sections is not limited to the mathematical expression above. Any method may be used as long as the method does not assign the same section to a plurality of assist devices at the same time, and can divide the original content so that the assignment is performed in accordance with the capabilities of the assist devices.
In the above-described method, the processing of each section is sequentially performed on the time axis. However, the content may be divided with consideration of the time required for the network transmission that is performed before and after the processing of each section.

Further, to fulfill the second condition, each assist device performs only the first transcode step on each of the assigned sections, and transmits only the result (e.g. compression rate) relating to the parameter assigned to the assist device to the recording apparatus 100. At this moment, the assist device transmits the section of the original content assigned to the assist device to the recording apparatus 100 as well. This is for enabling the recording apparatus 100 to request another assist device to perform the first transcode step on the section with use of different parameters.

To reduce the network traffic, the original content may not be transmitted here. Instead, the assist device may only disable the playback of the original content and notify the recording apparatus 100 of the end of the processing. If this is the case, upon receiving the notification of the end of the processing, the recording apparatus 100 enabling the playback of the section that has been disabled. In this case, the disabling of the playback is performed after the encryption is performed, by transmitting the encryption key to the assist device that has transmitted the content. The enabling of the playback may be performed by receiving the notification of the processing end together with the encryption key that has been received from the assist device and used for disabling the playback and performing the decryption using the encryption key. Then, the recording apparatus 100 instructs one of the assist devices that has reported the most favorable result among all the results received from the assist devices, to perform the second transcode step, and to transmit the result to the recording apparatus 100. Of course, since the processing of the sections is instructed to each assist device in different orders as described above, the judgement about the favorable result and the instruction for the second transcode step are performed after the first transcode step of each of the assist devices to which the parameters are assigned has been finished. In the case of the example shown in FIG. 23, The start of the second transcode step for the section 1 is instructed later than T=t₄. Of course, the first transcode step of each assist device may be firstly performed at the same time, and the second transcode step based on the determined parameters may be performed later. If this is the case, it is not necessary that the second transcode step is performed by the assist device that has reported the most favorable result after executing the first transcode step.

To reduce the network traffic, after the first transcode step is performed, the playback of the received content may be disabled by a method by which the playback can be enabled again (e.g. the above-described method performed by transmitting an encryption key). Then, when the second transcode step is instructed, the playback of the contents that has been received in the first transcode step, which has been disabled in the first transcode step, may be enabled again to be used. In this case, of course, an assist device that has not been instructed to perform the second transcode step before the processing end deletes the original content stored in the assist device in the unplayable state. Alternatively, the recording apparatus 100 may instructs such an assist device to delete the original content.

As described above, according to the fifth embodiment, different conversion parameters are assigned to the assist devices and the transcoding is performed by the assist devices using the conversion parameters. Therefore, it is possible to perform the transcoding with an improved compression ratio.

### Supplemental Explanation

The recording apparatus according to the present invention is described above based on the embodiments. However, the present invention is not limited to the embodiments.

In the embodiments above, the devices connected to the network are the digital TV, the personal computer, and the game machine. However, the present invention is not limited to this. For example, the devices connected to the network may be a portable phone, a playback device, and so on.
In the embodiment above, the capability of the device is notified to the available device detection unit in response to the request from the available device detection unit. However, the capability may be periodically notified to the recording apparatus 100 regardless of the request from the recording apparatus 100.

In the embodiments above, the DVD and the SD memory card are used as the target drives. However, the present invention is not limited to this. For example, the target drive may be a BD, a CD-R and a CD-RW. Also, the target drive may be a semiconductor memory card, such as a compact flash^{™} card, a smart media, a memory stick, a multimedia card, and a PCM-CIA card. Moreover, the target drive may be a magnetic recording disk such as a SuperDisk, a Zip, a Clik!, and a removal hard disk drive such as an ORB, a Jaz, a SparQ, a SyJet, an EZFley, and a microdrive.

In the embodiments above, the disabling of the playback is performed overwriting all the data with zeros. However, the present invention is not limited to this. For example, the disabling may be performed by deleting the encryption key, overwriting the I-pictures with zeros, overwriting the data with random numbers, and so on.
In the embodiments above, a recording apparatus is used. However, the present invention may be a method including the steps shown by the flowchart described above, a computer program including program codes for having a computer execute the steps shown by the flowchart, a computer readable recording medium, and an integrated circuit such as a system LSI. The system LSI may be called differently depending on the level of the integration, namely, an IC, an LSI, a super LSI, and an ultra LSI and so on.

The method of integration of the circuit is not limited to the LSI method. A special-purpose circuit or general-purpose processor may be used instead. LSI circuits whose configurations can be altered after production such as the programmable FPGA (Field Programmable Gate Array) or a reconfigurable processor whose circuit cell connections and settings are configurable may also be used.
Moreover, if, due to progress in the field of semiconductor technology or the derivation of another technology, a technology to replace LSI emerges, that technology may, as a matter of course, be used to integrate the functional block. The use of biotechnology, and the like is considered to be a possibility.

### Industrial Applicability

The internal structure of the recording apparatus according to the present invention is disclosed in the embodiments above. Therefore, the present invention can be mass-produced, and thereby industrially used. This means that the recording apparatus according to the present invention is industrially applicable.

## Claims

1. A recording apparatus for copying a digital stream recorded on a first recording medium using a code format compatible with the first recording medium to a second recording medium after the digital stream has been converted to a code format compatible with the second recording medium, comprising:
a detection unit operable to detect a plurality of devices that are available for distributed processing from devices connected to the recording apparatus via a network;
an allocation unit operable to divide the digital stream at one or more predetermined points on a playback time axis and to allocate the divided portions to the detected devices respectively;
a transmission unit operable to transmit the allocated portions to the respective detected devices;
a control unit operable to control the detected devices to perform transcoding for converting a code format of the allocated portions to the code format compatible with the second recording device; and
a writing unit operable to receive converted portions resulting from the transcoding from the detected devices and to write the received portions to the second recording medium.

2. The recording apparatus of Claim 1, wherein
a time length of each of the divided portions is obtained by dividing a total playback time of the digital stream by the number of the detected devices.

3. The recording apparatus of Claim 1, wherein
the detection unit acquires, from the respective detected devices, capability values thereof, and
time lengths of the divided portions to be respectively allocated to the detected devices are based on a ratio of each capability value to a total of the capability values.

4. The recording apparatus of Claim 3, wherein
the capability values are transmission rates on a transmission medium to which the detected devices are connected.

5. The recording apparatus of Claim 3, wherein
the capability values are clock frequencies of the detected devices.

6. The recording apparatus of Claim 3, wherein
the capability values are memory capacities of the detected devices.

7. The recording apparatus of Claim 1, wherein
the transcoding is real-time processing that requires a time that is the same as a playback time of the digital stream;
the detection unit periodically detects the devices;
if the detection unit detects the devices a plurality of times within the playback time of the digital stream, the allocation unit allocates the divided portions to the detected devices every time the detection is performed,
the transmission unit transmits the allocated portions to the respective detected devices, and
the control unit instructs the detected devices to perform the transcoding of the portions respectively allocated thereto.

8. The recording apparatus of Claim 1, wherein
the transmission unit assigns unique encryption keys to the respective detected devices, and transmits the allocated portions to the respective detected devices after encrypting the allocated portions using the encryption keys.

9. The recording apparatus of Claim 1 further comprising
a transcode unit operable to perform the transcoding, wherein
the detection unit detects the recording apparatus as a device that is available for the distributed processing if the recording apparatus is capable of performing the transcoding.

10. The recording apparatus of Claim 9, wherein
the transcode unit is used for writing the digital stream to the second recording medium, and
the detection unit does not detect the recording apparatus as the device that is available for the distributed processing while the digital stream is being recoded.

11. The recording apparatus of Claim 10 further comprising
a display unit operable to display, when a recording instruction is input from a user, a message saying that transcode efficiency is decreased while recording is executed.

12. The recording apparatus of Claim 1 further comprising
a displayunit operable todisplaya list of the detected devices; and
a reception unit operable to receive a selection by a user of a device to be used for the distributed processing, wherein
the control unit has all the detected devices perform the transcoding if the user select all the detected devices, and does not has a device not selected by the user perform the transcoding.

13. The recording apparatus of Claim 12, wherein
the display unit calculates and displays a predicted time required for transcoding a whole of the digital stream on reception of the selection by the user.

14. The recording apparatus of Claim 1, wherein
the control unit assigns an identifier to each of the divided portions before the portions are transmitted to the respective detected devices, and
if results of the transcoding are transmitted from the detected devices, the writing unit combines the results according to identifiers assigned to the results and writes the combined results to the second recording medium.

15. The recording apparatus of Claim 1, wherein
the predetermined points on the playback time axis are points where copy control information included in the digital stream changes.

16. The recording apparatus of Claim 1 further comprising
an allocation unit operable to allocate one of a plurality of conversion parameters to each of the detected devices, wherein
the control unit controls the detected device to perform the transcoding of the digital stream using the respective allocated conversion parameters.

17. The recording apparatus of Claim 16, wherein
the conversion parameters are combinations of patterns of encoding unit and encoding bit rates.

18. The recording apparatus of Claim 1, wherein
the detection unit detects the devices by broadcasting a detection message to the network and receiving responses from the devices.

19. The recording apparatus of Claim 1, wherein
the detection unit acquires a capability value of a device connected to the recording apparatus via the network if the device notifies the recording apparatus of the capability value.

20. A distributed processing system that includes a recording apparatus and devices connected thereto,
the recording apparatus comprising:
a detection unit operable to detect a plurality of devices that are available for distributed processing from devices connected to the recording apparatus via a network;
an allocation unit operable to divide the digital stream at one or more predetermined points on a playback time axis and to allocate the divided portions to the detected devices respectively;
a transmission unit operable to transmit the allocated portions to the respective detected devices;
a control unit operable to control the detected devices to perform transcoding for converting a code format of the allocated portions to the code format compatible with the second recording device; and
a writing unit operable to receive converted portions resulting from the transcoding from the detected devices andtowrite the received portions to the second recording medium.

21. A computer-readable program that causes a computer to perform a processing procedure for copying a digital stream recorded on a first recording medium using a code format compatible with the first recording medium to a second recording medium after the digital stream has been converted to a code format compatible with the second recording medium, the program comprising:
a detection step of detecting a plurality of devices that are available for distributed processing from devices connected to the recording apparatus via a network;
an allocation step of dividing the digital stream at one or more predetermined points on a playback time axis and allocating the divided portions to the detected devices respectively;
a transmission step of transmitting the allocated portions to the respective detected devices;
a control step of controlling the detected devices to perform transcoding for converting a code format of the allocated portions to the code format compatible with the second recording device; and
a writing step of receiving converted portions resulting from the transcoding from the detected devices and writing the received portions to the second recording medium.

22. A system integrated circuit used in a recording apparatus for copying a digital stream recorded on a first recording medium using a code format compatible with the first recording medium to a second recording medium after the digital stream has been converted to a code format compatible with the second recording medium, the system integrated circuit comprising:
a detection unit operable to detect a plurality of devices that are available for distributed processing from devices connected to the recording apparatus via a network;
an allocation unit operable to divide the digital stream at one or more predetermined points on a playback time axis and to allocate the divided portions to the detected devices respectively;
a transmission unit operable to transmit the allocated portions to the respective detected devices;
a control unit operable to control the detected devices to perform transcoding for converting a code format of the allocated portions to the code format compatible with the second recording device; and
a writing unit operable to receive converted portions resulting from the transcoding from the detected devices and to write the received portions to the second recording medium.

23. A distributed processing method for copying a digital stream recorded on a first recording medium using a code format compatible with the first recording medium to a second recording medium after the digital stream has been converted to a code format compatible with the second recording medium, comprising:
a detection step of detecting a plurality of devices that are available for distributed processing from devices connected to the recording apparatus via a network;
an allocation step of dividing the digital stream at one or more predetermined points on a playback time axis and allocating the divided portions to the detected devices respectively;
a transmission step of transmitting the allocated portions to the respective detected devices;
a control step of controlling the detected devices to perform transcoding for converting a code format of the allocated portions to the code format compatible with the second recording device; and
a writing step of receiving converted portions resulting from the transcoding from the detected devices and writing the received portions to the second recording medium.
